# EUROPEAN PATENT SPECIFICATION

(11) **EP 2 619 498 B1**
(45) Date of publication and mention of the grant of the patent: **22.10.2014**
(21) Application number: 11770479.1
(22) Date of filing: 08.09.2011
(51) Int. Cl.: F17C 13/00

(54) **METHOD FOR PROTECTING A GAS CYLINDER WITH A PLASTIC SLEEVE**
VERFAHREN, UM EINEN GASBEHÄLTER MIT EINER PLASTIKHÜLLE ZU SCHÜTZEN
METHODE POUR PROTÉGER UNE BOUTEILLES DE GAZ AVEC UN MANCHON EN PLASTIQUE

(30) Priority: 14.09.2010 GB 201015288
(43) Date of publication of application: 31.07.2013
(73) Proprietor: Linde Aktiengesellschaft, 80331 München (DE)
(72) Inventor: ANCLIFFE, Dan, Guildford GU2 7XY (GB); DREW, Wane, Wolverhampton West Midlands WV1 2EP (GB)
(74) Representative: Christie, Gemma Louise
(86) International application number: PCT/GB2011/001311
(87) International publication number: WO 2012/035289

(56) References cited:
- EP-B1- 1 353 849
- DE-A1- 19 642 696
- FR-A- 1 140 585
- GB-A- 925 977
- GB-A- 1 427 935
- US-A- 4 199 851
- US-A- 4 686 755
- US-A- 5 775 019
- US-A- 5 922 158

## Description

This invention relates to gas cylinders. More particularly it relates to a method of protecting a gas cylinder, for example, a medical gas cylinder or industrial gas cylinder.

It is common practice to protect a gas cylinder, that is a cylindrical pressure vessel containing a permanent or non-permanent gas at an elevated pressure, typically in the range of 25 to 300 bar, by means of a plastics sleeve. The plastics sleeve may bear on its external surface legends, pictures, writing or other information.

There are two known methods for expanding a sleeve to fit onto a cylinder. In a first method, one open end of a sleeve is pushed against the shoulder of a gas cylinder and compressed air is forced through the gap between the sleeve and the cylinder so as to cause the sleeve to ride down the body of the cylinder on a cushion of escaping air. Such a method requires precision machinery to be implemented and is wasteful of compressed air. In a second method, the sleeve is heated to soften the plastics material, and is then slid over an axially split cylindrical mandrel. Expansion of the sleeve is caused by forcing apart the two halves of the mandrel under hydraulic pressure. The sleeve is removed from the mandrel and fitted to the cylinder. Such a method is disadvantageous because uniform radial expansion of the sleeve is difficult to achieve.

It is an aim of the method according to the invention to overcome these disadvantages.

DE 196 42 696 discloses a compressed-air cylinder provided with one or more sheaths consisting of a partial or total covering. The sheaths can be used, for example, as a support for markings, signs or stickers.

According to the present invention there is provided a method of protecting a gas cylinder with a plastics sleeve, comprising the steps of placing a plastics sleeve over a complementary inflatable former of elastomeric material, inflating the former so as reversibly to stretch the plastics sleeve radially, deflating the former, removing the sleeve from the former, and fitting the stretched plastics sleeve over the gas cylinder before the plastics sleeve shrinks again.

Preferred or optional features of the method according to the invention are:
the former is inflated within a guard - this protects the operator in the unlikely event of the former of sleeve bursting;
the guard is retractable relative to the sleeve and former; alternatively the guard is fixed and the sleeve and former may be lowered and raised relative thereto;
the releasing of the guard is effected by an operator placing both hands on a control box - this eliminates the risk of an operator getting a hand trapped in the machinery;
the former is provided with an internal frame which limits its collapse on deflation;
the plastics material is transparent or translucent;
the plastics material is HDPE (high density polyethylene);
the former is inflated pneumatically or hydraulically;
the former is inflated for a chosen period of time;
the chosen period of time is from 15 to 55 seconds.
the plastics sleeves have longitudinal external ribs which provide protection for the cylinder;
a single machine may be employed to stretch more than one sleeve at the same time; the sleeves may have different diameters.

There is no need to preheat the plastics material. Consumption of compressed air can be kept low because the former may simply retain the air.

The method according to the invention will now be described by way of example with reference to the accompanying drawings, which is a schema of a machine for stretching a plastics sleeve.

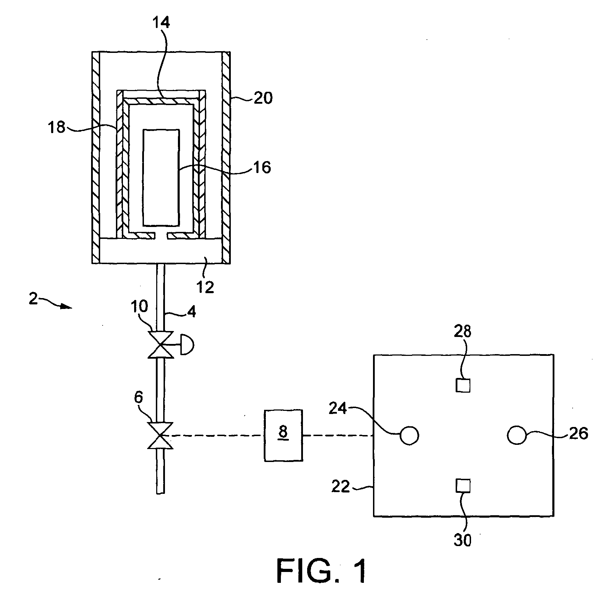

Referring to the drawing, a step of radially stretching a plastics sleeve is performed by a semi-automatic expansion machine 2. The machine comprises a compressed air supply pipe 4 able to be connected to a source of compressed air. The compressed air pipe 4 has a solenoid on-off valve 6 disposed in it. The solenoid valve 6 has a valve controller 8 associated with it. Downstream of the solenoid valve 6 is a pressure regulator 10. The end of the pipe 4 downstream of the pressure regulator 10 terminates in an air distributor 12 to which an inflatable elastomeric former 14 is connected fluid tight. The former 14 takes the form of an inflatable pipe plug and has an internal frame 16 that prevents internal collapse when the pressure is relaxed within the former 14. A plastics sleeve 18 to be stretched is able to be fitted over the former 14, as shown in the drawing. The former 14 typically has approximately the same height as the sleeve 18.

The machine 2 is provided with a retractable guard 20. As shown, the guard 20 is in its "up" or operative position surrounding the sleeve 18. In a typical arrangement a motor (not shown) or other means (hot shown) which is operated to raise the guard 20 forms part of the machine 2. Typically, the valve controller 8 prevents opening of the solenoid valve 6 when the guard 20 is in its retracted position.

The machine 2 typically has a control panel 22. The machine 2 is arranged so that the control panel is at a convenient height and angle for manual operation. The machine 2 is intended for two handed operation to ensure hands are kept away from moving parts. Thus, in operation only the former (or expander) 14 is exposed apart from the control panel 22. The operator places the sleeve 18 over the former 16. The distributor 12 may act as a stop for the sleeve 18. Typically the sleeve fractionally engages the former 16 when in position for expansion. The control panel 22 typically has first and second on-off buttons 24 and 26, spaced so that one can be operated with the left hand and the other with the right hand. Manual depression of both buttons 24 and 26 simultaneously is required to actuate the expansion machine. Operating the buttons 24 and 26 causes the guard 20 to be raised. A first warning light 28 in the control panel 22 indicates when the guard is in its uppermost position. The operator then releases both buttons 24 and 26 and the solenoid valve 6 opens automatically supply air to the former 14 and to cause it to expand and to stretch the sleeve 18 radially. Typically the air pressure is applied to the former 14 for a period of from 15 to 55 seconds as determined by a timer circuit (not shown) in the valve controller 8. This period is selected to prevent over-expansion of the sleeve 18. At the end of the period the solenoid valve 6 automatically closes and the guard 20 is automatically fully retracted. A second warning light 30 in the control panel 22 flashes, informing the operator that the sleeve 18, now radially stretched in a uniform manner, is ready to be removed.

Once the former 14 has been deflated, it is desirable to remove the sleeve 18 from the machine 2 and slide it into position on a complementary gas cylinder without delay.

The sleeve 18 is typically formed of high density polyethylene (HDPE) and typically has a wall thickness of 0.5 to 5mm. Its external direction may be in the range from 50mm to 250mm. The air pressure applied to the former, typically in the order of 2.5 bar absolute, is arranged to give a significant but non-distorting, circumferentially uniform, radial stretching of the sleeve without exceeding the elastic limit of the plastics material. Because the elastic limit is not exceeded, the plastics sleeve 18 contracts in the gas cylinder to form a tight engagement with the body of the cylinder. It is generally desirable to have the stretched sleeve 18 fitted to the cylinder within 30 to 40 seconds of release of the pneumatic pressure from the former 14.

Alternative materials from which the sleeve can be formed include polypropylene, polyvinyl chloride, and VPE.

The sleeve 18 may bear writing, pictures and/or other information. It may be applied to conventional or fibre wrapped gas cylinders.

The gas cylinder may be of any capacity, for example, 2 litres and may be a medical gas cylinder

## Claims

1. A method of protecting a gas cylinder with a plastics sleeve (18), comprising the steps of placing a plastics sleeve (18) over a complementary inflatable former (14) of elastomeric material, inflating the former (14) so as to reversibly stretch the plastics sleeve (18) radially, deflating the former (14), removing the sleeve (18) from the former (14), and fitting the stretched plastics sleeve (18) over the gas cylinder before the plastics sleeve (18) shrinks again.

2. A method according to claim 1, wherein the former (14) is inflated within a guard (20).

3. A method according to claim 2, wherein the guard (20) is retractable.

4. A method according to claim 3, wherein raising of the guard (20) is effected by an operator placing both hands on controls (22) associated with the guard.

5. A method according to claim 2, wherein the guard (20) is fixed, and the sleeve (18) and burner are moved into and out of position.

6. A method according to any one of the preceding claims, wherein the former (14) has an internal frame (16) which limits its collapse on deflation.

7. A method according to any one of the preceding claims, wherein the former (14) is inflated pneumatically or hydraulically.

8. A method according to any one of the preceding claims, wherein the former (14) is inflated for a period of time of 15 to 55 seconds.

9. A method according to any one of the preceding claims, wherein the plastics sleeve (18) is of high density polyethylene (HDPE).

10. A method according to any one of the preceding claims, wherein the plastics sleeve (18) bears informative markings.

11. A method according to any one of the preceding claims, wherein the gas cylinder is a medical gas cylinder.

## Patentansprüche

1. Verfahren, um einen Gaszylinder mit einer Plastikhülle (18) zu schützen, umfassend die Schritte: Anordnen der Plastikhülle (18) über einen ergänzenden aufblasbaren Former (14) aus Elastomermaterial, Aufblasen des Formers (14), um die Plastikhülle (18) reversibel radial zu strecken, Entleeren der Luft aus dem Former (14), Entfernen der Hülle (18) vom Former (14) und Anlegen der gestreckten Plastikhülle (18) an den Gaszylinder vor erneutem Schrumpfen der Plastikhülle (18).

2. Verfahren nach Anspruch 1, wobei der Former (14) innerhalb einer Schutzvorrichtung (20) aufgeblasen wird.

3. Verfahren nach Anspruch 2, wobei die Schutzvorrichtung (20) einfahrbar ist.

4. Verfahren nach Anspruch 3, wobei das Anheben der Schutzvorrichtung (20) von einem Bediener durch Anordnen der beider Hände an Steuerungen (22) durchgeführt wird, die mit der Schutzvorrichtung verbunden sind.

5. Verfahren nach Anspruch 2, wobei die Schutzvorrichtung (20) fixiert ist und die Hülle (18) und ein Brenner in eine und aus einer Position bewegt werden.

6. Verfahren nach einem der vorhergehenden Ansprüche, wobei der Former (14) ein inneren Rahmen (16) aufweist, der das Einsinken bei Entleerung einschränkt.

7. Verfahren nach einem der vorhergehenden Ansprüche, wobei der Former (14) pneumatisch oder hydraulisch aufgeblasen wird.

8. Verfahren nach einem der vorhergehenden Ansprüche, wobei der Former (14) während eines Zeitraums von 15 bis 55 Sekunden aufgeblasen wird.

9. Verfahren nach einem der vorhergehenden Ansprüche, wobei die Plastikhülle (18) aus hochdichtem Polyethylen (HDPE) besteht.

10. Verfahren nach einem der vorhergehenden Ansprüche, wobei die Plastikhülle (18) informative Markierungen aufweist.

11. Verfahren nach einem der vorhergehenden Ansprüche, wobei der Gaszylinder ein medizinischer Gaszylinder ist.

## Revendications

1. Procédé pour protéger une bouteille de gaz avec un manchon en plastique (18), comprenant les étapes consistant à placer un manchon en plastique (18) par-dessus un formeur gonflable complémentaire (14) en matériau élastomère, gonfler le formeur (14) de manière à étirer radialement et de façon réversible le manchon en plastique (18), dégonfler le formeur (14), enlever le manchon (18) du formeur (14) et ajuster le manchon en plastique étiré (18) par-dessus la bouteille de gaz avant que le manchon en plastique (18) ne se rétracte à nouveau.

2. Procédé selon la revendication 1, dans lequel le formeur (14) est gonflé à l'intérieur d'une enceinte (20).

3. Procédé selon la revendication 2, dans lequel l'enceinte (20) est rétractable.

4. Procédé selon la revendication 3, dans lequel le soulèvement de l'enceinte (20) est effectué par un opérateur plaçant les deux mains sur des commandes (22) associées à l'enceinte.

5. Procédé selon la revendication 2, dans lequel l'enceinte (20) est fixée et le manchon (18) et le brûleur sont déplacés en position et hors de position.

6. Procédé selon l'une quelconque des revendications précédentes, dans lequel le formeur (14) présente un cadre interne (16) qui limite son affaissement lors du dégonflage.

7. Procédé selon l'une quelconque des revendications précédentes, dans lequel le formeur (14) est gonflé pneumatiquement au hydrauliquement.

8. Procédé selon l'une quelconque des revendications précédentes, dans lequel le formeur (14) est gonflé pendant une période de temps de 15 à 55 secondes.

9. Procédé selon l'une quelconque des revendications précédentes, dans lequel le manchon en plastique (18) est du polyéthylène haute densité (HDPE).

10. Procédé selon l'une quelconque des revendications précédentes, dans lequel le manchon en plastique (18) porte des marquages informatifs.

11. Procédé selon l'une quelconque des revendications précédentes, dans lequel la bouteille de gaz est une bouteille de gaz médical.
